# EUROPEAN PATENT SPECIFICATION

(11) **EP 1 939 477 B1**
(45) Date of publication and mention of the grant of the patent: **23.04.2014**
(21) Application number: 06781401.2
(22) Date of filing: 14.07.2006
(51) Int. Cl.: F16D 23/06, F16H 57/04

(54) **TRANSMISSION**
GETRIEBE
TRANSMISSION

(30) Priority: 26.09.2005 JP 2005278965
(43) Date of publication of application: 02.07.2008
(73) Proprietor: Aichi Kikai Kogyo Kabushiki Kaisya, Nagoya-shi, Aichi 456-8601 (JP)
(72) Inventor: AOYAMA, Hideki, Nagoya-shi Aichi 456-8601 (JP); SAWAKI, Yasuhiro, Nagoya-shi, Aichi 456-8601 (JP); NAKAMURA, Tsutomu, Nagoya-shi Aichi 456-8601 (JP)
(74) Representative: Schaeberle, Steffen
(86) International application number: PCT/JP2006/314446
(87) International publication number: WO 2007/034620

(56) References cited:
- JP-A- 11 013 785
- JP-A- H11 101 270
- JP-A- 2002 206 627
- JP-A- 2005 163 833
- JP-U- 51 026 943

## Description

### Technical Field

The present invention relates to a transmission.

### Background Art

Heretofore, as disclosed in Patent Document 1, a kind of transmission is suggested that includes a driven gear as a speed change gear rotatably supported by a countershaft, a clutch gear provided on an outer periphery of the driven gear near a blocking ring, and a sleeve arranged slidably in an axial direction on an outer peripheral surface of a hub. The sleeve is moved toward the driven gear and is meshed with the clutch gear, so that the countershaft and the driven gear are coupled in a meshed manner.

In this transmission, an outer diameter of the driven gear is formed larger than an inner diameter of the sleeve. The sleeve is shifted until the sleeve contacts a side surface of the driven gear to establish a shift position.
Patent Document 1: Japanese Patent No. 2724742

However, in the above-described transmission, if the sleeve contacts the side surface of the driven gear, lubricating oil is no longer supplied to the clutch gear. The clutch gear may be subjected to wear, possibly affecting speed change performance.

An other transmission is disclosed in Japanese Patent No. 11-13785.

### Disclosure of Invention

The present invention is made in light of the above-described conventional problems, and an object of the present invention is to provide a transmission that improves wear resistant property of a clutch gear. According to claim 1, a configuration includes a clutch gear arranged at a side surface of a speed change gear and being rotatable integrally with the speed change gear, a coupling sleeve connectable to the clutch gear by sliding on an outer peripheral surface of a synchronizer hub, a stopper arranged between the side surface of the speed change gear and an end surface in a sliding direction of the coupling sleeve, to restrain the sliding of the coupling sleeve toward the speed change gear, a lubrication groove as a lubricating oil passage formed at a contact surface between the coupling sleeve and the stopper, the lubrication groove being capable of supplying lubricating oil to the clutch gear when the coupling sleeve contacts the stopper, and an inner end surface of each stopper facing an outer peripheral surface of the clutch gear is formed at a position slightly distant from the outer peripheral surface of the clutch gear in a radial direction so as to have a clearance with respect to the outer peripheral surface of the clutch gear.

Also, according to claim 2, the stopper has a contact portion that contacts the coupling sleeve at least at two positions in a circumferential direction, and the lubrication groove is formed to have a width in the circumferential direction equal to or larger than a width of the contact portion in the circumferential direction.

Also, according to claim 3, the contact potion is formed as projecting portions having the widths in the circumferential direction being uniform and arranged at even intervals in the circumferential directions, and the lubrication groove is a recessed portion formed between the projecting portions.

Also, according to claim 4, the lubrication groove is formed such that at least one of end surfaces of the recessed portion in the circumferential direction is positioned between teeth of the clutch gear.

Also, according to claim 5, the stopper is formed at an end surface of the speed change gear.

Also, according to claim 6, the coupling sleeve is formed such that an outer peripheral surface is declined toward the end surface that contacts the stopper, so as to guide the lubricating oil on the outer peripheral surface to the contact surface.

A transmission of the present invention includes the clutch gear arranged at the side surface of the speed change gear and being rotatable integrally with the speed change gear, the coupling sleeve connectable to the clutch gear by sliding on the outer peripheral surface of the synchronizer hub, the stopper arranged between the side surface of the speed change gear and the end surface in the sliding direction of the coupling sleeve, to restrain the sliding of the coupling sleeve toward the speed change gear, the lubrication groove as the lubricating oil passage formed at the contact surface between the coupling sleeve and the stopper, the lubrication groove being capable of supplying the lubricating oil to the clutch gear when the coupling sleeve contacts the stopper, and the communication passage arranged between the outer peripheral surface of the clutch gear and the inner end surface of the stopper facing the outer peripheral surface, for communication between the lubrication groove with another lubrication groove. Accordingly, the lubricating oil can be reliably supplied to the clutch gear even when the coupling sleeve contacts the stopper, and hence, the wear resistant property of the clutch gear can be improved.

Also, the stopper has the contact portion that contacts the coupling sleeve at least at the two positions in the circumferential direction, and the lubrication groove is formed to have the width in the circumferential direction equal to or larger than the width of the contact portion in the circumferential direction. Accordingly, when the coupling sleeve contacts the contact portion of the stopper, the lubricating oil can be efficiently supplied to the clutch gear.

Also, the contact potion is formed as the projecting portions having the widths in the circumferential direction being uniform and arranged at even intervals in the circumferential directions, and the lubrication groove is the recessed portion formed between the projecting portions. Accordingly, the sliding of the coupling sleeve toward the speed change gear can be stably restrained with the simple configuration, and hence, the lubricating oil can be efficiently supplied to the clutch gear.

Also, the lubrication groove is formed such that at least the one of end surfaces of the recessed portion in the circumferential direction is positioned between the teeth of the clutch gear. Accordingly, the lubricating oil can be supplied to a greater number of the teeth of the clutch gear.

Also, the stopper is formed at the end surface of the speed change gear. Accordingly, the stopper can be simply constituted by merely allowing the coupling sleeve to contact the end surface of the speed change gear.

Also, the coupling sleeve is formed such that the outer peripheral surface is declined toward the end surface that contacts the stopper, so as to guide the lubricating oil on the outer peripheral surface to the contact surface. Accordingly, a greater amount of the lubricating oil can be supplied to the clutch gear.

### Brief Description of the Drawings

Fig. 1 is an arrangement diagram showing a transmission.
Fig. 2 is an enlarged arrangement diagram showing a speed change gear and a coupling sleeve.
Fig. 3 is a plan view showing the speed change gear.
Fig. 4 is a cross-sectional view taken along a line A-A in Fig. 3.

### Best Mode for Carrying Out the Invention

An embodiment of the present invention is described below with reference to the drawings.

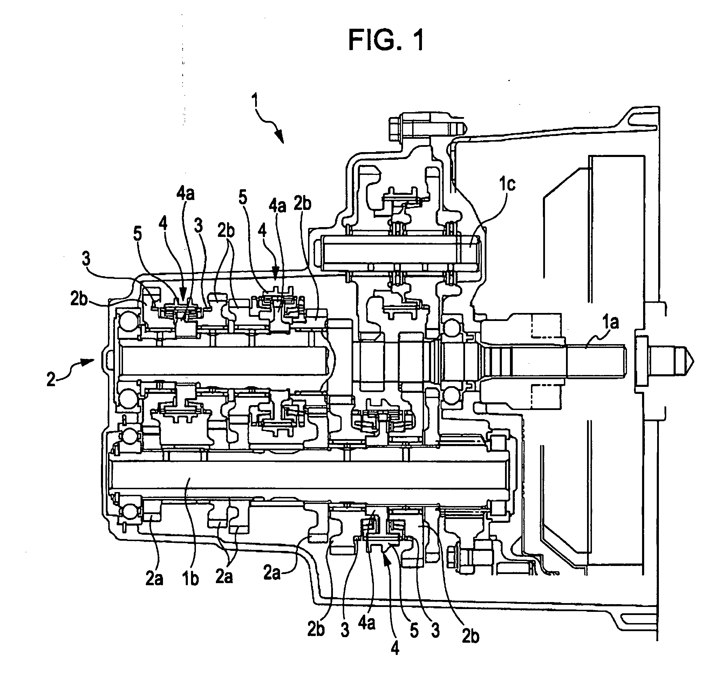

Fig. 1 is a diagram schematically showing a transmission.

As illustrated, a transmission 1 according to the embodiment includes an input shaft 1a; an output shaft 1b and a reverse idler shaft 1c provided in parallel to the input shaft 1a; a speed change gear mechanism 2 arranged at each of these shafts so as to shift the power of the input shaft 1a and transmit the shifted power to the output shaft 1b or to the reverse idler shaft 1c; and a synchronizer 4 that synchronizes gears to be meshed.

The speed change gear mechanism 2 is a known helical gear, and includes a fixed gear 2a supported at each shaft in a fixed manner, and an idling gear 2b supported at each shaft in an idling manner. The idling gear 2b is integrally formed with a clutch gear 3.

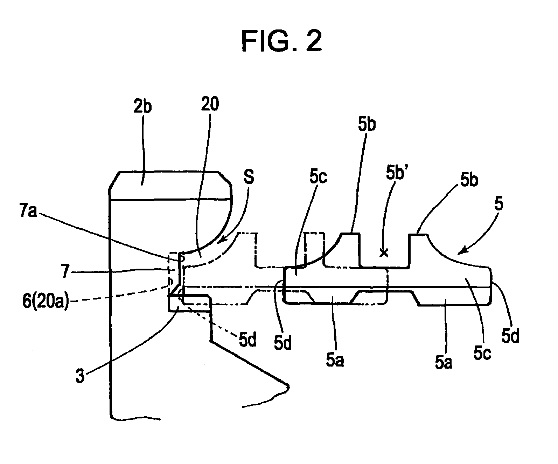

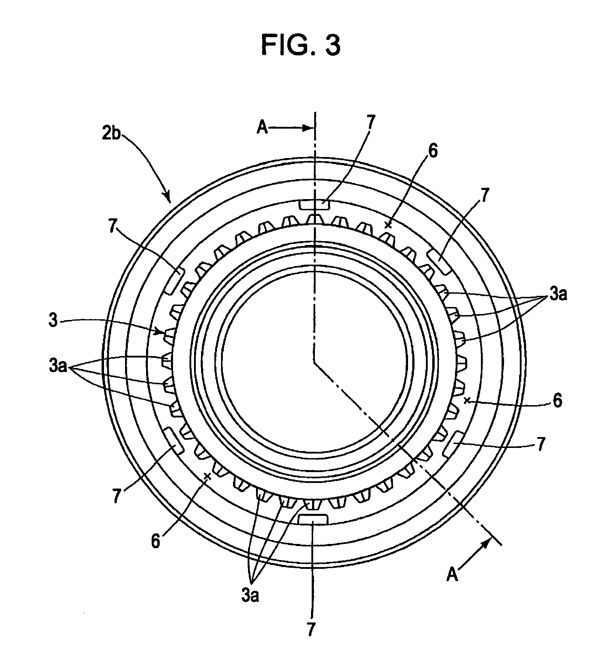

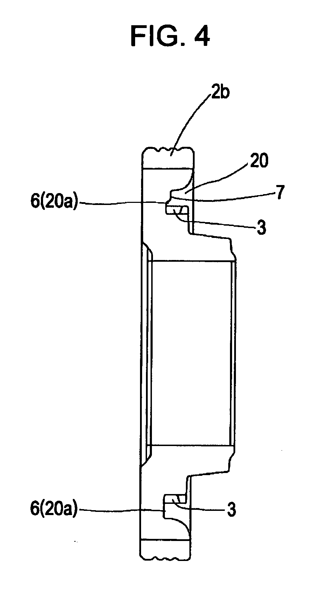

As shown in an enlarged schematic diagram in Fig. 2, the idling gear 2b has a recessed portion 20 formed such that an end surface thereof is recessed. The clutch gear 3 is formed by being buried in the recessed portion 20. Also, as shown in a plan view in Fig. 3 and in Fig. 4 that is a cross-sectional view taken along a line A-A in Fig. 3, the recessed portion 20 has six projecting portions 7 formed at even intervals in a circumferential direction and having a uniform width in the circumferential direction. A bottom portion 20a containing portions between the projecting portions 7 define lubrication grooves 6 as lubricating oil passages.

The projecting portion 7 is configured such that both end surfaces thereof in the circumferential direction are located between a tooth 3a and a tooth 3a of the clutch gear 3 with one tooth 3a of the clutch gear 3 interposed between these teeth 3a and 3a. An inner end surface of each projecting portion 7 facing an outer peripheral surface of the clutch gear 3 is formed at a position slightly distant from the outer peripheral surface of the clutch gear 3 in a radial direction so as to have a clearance with respect to the outer peripheral surface of the clutch gear 3.

The synchronizer 4 has a synchronizer hub 4a supported at a shaft in a fixed manner, and a coupling sleeve 5 arranged slidably on an outer periphery of the synchronizer hub 4a. The coupling sleeve 5 slides in the axial direction and meshes with the clutch gear 3, whereby the synchronizer 4 synchronizes rotation of the shaft and rotation of the idling gear 2b.

The coupling sleeve 5 has, on its inner peripheral surface, a spline 5a that is fitted to a spline formed on an outer peripheral surface of the synchronizer hub 4a. The coupling sleeve 5 has, on its outer peripheral surface, an engagement portion 5b having an engagement groove 5b' with which a shifter fork (not shown) engages, and a collar portion 5c having a contact surface 5d that projects in the axial direction from the engagement portion 5b and contacts a contact portion 7a of the projecting portion 7.

The collar portion 5c is formed to have a length in the axial direction, the length allowing a clearance S to be generated between the idling gear 2b and the engagement portion 5b while the contact surface 5d contacts the contact portion 7a. The collar portion 5c is declined such that the height thereof decreases as being away from the engagement portion 5b in the axial direction.

Next, an operation of the transmission 1 thus configured, in particular, motion of the lubricating oil supplied to the clutch gear 3 during a speed change operation is described.

When a driver performs a shift operation, the shifter fork causes the coupling sleeve 5 to be shifted to the idling gear 2b, which constitutes a requested gear position. Then, the contact surface 5d contacts the contact portion 7a, and the speed change operation is completed.

Since the contact portions 7a, that is, the projecting portions 7 are formed at even intervals in the circumferential direction and have a uniform width in the circumferential direction, the projecting portions 7 can stably restrain the sliding of the coupling sleeve 5.

Since the clearance S is generated between the idling gear 2b and the engagement portion 5b while the contact surface 5d contacts the contact portion 7a, lubricating oil is collected by the fixed gear 2a and the idling gear 2b constituting the speed change gear mechanism 2, and flows into the recessed portion 20 through the clearance S. Herein, since the collar portion 5c is declined such that the height thereof decreases as being away from the engagement portion 5b in the axial direction, the lubricating oil collected by the fixed gear 2a and the idling gear 2b easily flows toward the recessed portion 20.

The lubricating oil flowed into the recessed portion 20 is supplied to the clutch gear 3 through the lubrication groove 6. Herein, since the projecting portion 7 is configured such that both end surfaces thereof in the circumferential direction are located between the tooth 3a and the tooth 3a of the clutch gear 3 with one tooth 3a of the clutch gear 3 interposed between these teeth 3a and 3a, the lubricating oil from the lubricating groove 6 can be sufficiently supplied to tooth faces of all the teeth 3a of the clutch gear 3. Also, since the inner end surface of the projecting portion 7b facing the outer peripheral surface of the clutch gear 3 is formed at a position slightly distant from the outer peripheral surface of the clutch gear 3 in the radial direction so as to have a clearance with respect to the outer peripheral surface of the clutch gear 3, the lubricating oil can be supplied evenly in the circumferential direction of the clutch gear 3.

With the transmission 1 according to the above-described embodiment, since the projecting portions 7, which serves as a stopper that restrains the sliding of the coupling sleeve 5 in the axial direction, are formed at the recessed portion 20 of the idling gear 2b, in which the clutch gear 3 is buried, at even intervals in the circumferential direction, and since the bottom portion 20a of the recessed portion 20 containing the portions between the projecting portions 7 are configured as the lubrication grooves 6, the lubricating oil can be reliably supplied to the clutch gear 3 even when the coupling sleeve 5 contacts the projecting portion 7. As a result, wear resistant property of the clutch gear 3 can be improved. Also, since the collar portion 5c of the coupling sleeve 5 is declined toward the recessed portion 20, the lubricating oil collected by the fixed gear 2a and the idling gear 2b easily flows toward the recessed portion 20. Hence, a greater amount of the lubricating oil can be supplied to the clutch gear 3.

Also, since the projecting portion 7 is configured such that both end surfaces thereof in the circumferential direction are located between the tooth 3a and the tooth 3a of the clutch gear 3 with one tooth 3a of the clutch gear 3 interposed between these teeth 3a and 3a, the lubricating oil from the lubricating oil 6 can be sufficiently supplied to the tooth faces of all the teeth 3a of the clutch gear 3. Further, since the projecting portions 7 may be simply formed at the recessed portion 20, the stopper can be constituted by the simple configuration.

While the projecting portions 7 are formed at even intervals in the circumferential direction in the transmission 1 according to the embodiment, the intervals do not have to be even.

While all the projecting portions 7 has a uniform width in the circumferential direction in the transmission 1 according to the embodiment, each projecting portion 7 may have a different width in the circumferential direction.

While the six projecting portions 7 are formed in the circumferential direction in the transmission 1 according to the embodiment, the number of projecting portions 7 may be any, as long as at least two projecting portions 7 are formed.

While the dimension between the projecting portions 7, that is, the width of the lubrication groove 6 in the circumferential direction between the projecting portions 7 is larger than the width of the projecting portion 7 in the circumferential direction in the transmission 1 according to the embodiment, the relationship between the width of the lubrication groove 6 in the circumferential direction between the projecting portions 7 and the width of the projecting portion 7 in the circumferential direction is not particularly limited, as long as the lubricating oil can be supplied to the clutch gear 3.

While both end surfaces of the projecting portion 7 in the circumferential direction are configured to be located between the tooth 3a and the tooth 3a of the clutch gear 3 in the transmission 1 according to the embodiment, at least one of both end surfaces in the circumferential direction may be configured to be located between the tooth 3a and the tooth 3a of the clutch gear 3.

While the width of the projecting portion 7 in the circumferential direction is configured to have a dimension for allowing one tooth 3a of the clutch gear 3 to be interposed in the transmission 1 according to the embodiment, it is not limited thereto. For example, a dimension may allow two or three teeth 3a of the clutch gear 3 to be interposed. The dimension may be any, as long as the lubricating oil can be supplied to all the teeth 3a of the clutch gear 3.

While the projecting portions 7 as the stopper, and the lubrication grooves 6 as the lubricating oil passages, are formed at the recessed portion 20 of the idling gear 2b in the transmission 1 according to the embodiment, these components may be formed at the contact surface 5d of the coupling sleeve 5.

Hereinbefore, the mode of the present invention has been described with the embodiment, the present invention is not limited to such an embodiment. The present invention, of course, can be implemented according to various modes within the scope of the claims.

## Claims

1. A transmission comprising:
a clutchgear (3) arranged at a side surface of a speed change gear (2) and being rotatable integrally with the speed change gear (2);
a coupling sleeve(5) connectable to the clutch gear (3) by sliding on an outer peripheral surface of a synchronizer hub;
a stopper (7) arranged between the side surface of the speed change gear (2) and an end surface in a sliding direction of the coupling sleeve (5), to restrain the sliding of the coupling sleeve toward the speed change gear (2); **characterised in that**
a lubrication groove (6) as a lubricating oil passage formed at a contact surface between the coupling sleeve (5) and the stopper (7), the lubrication groove (6) being capable of supplying lubricating oil to the clutch gear (3) when the coupling sleeve (5) contacts the stopper; and
an inner end surface of each stopper (7) facing an outer peripheral surface of the clutch gear (3) is formed at a position slightly distant from the outer peripheral surface of the clutch gear (3) in a radial direction so as to have a clearance with respect to the outer peripheral surface of the clutch gear (3).

2. The transmission according to claim 1,
wherein the stopper (7) has a contact portion that contacts the coupling sleeve (5) at least at two positions in a circumferential direction, and
wherein the lubrication groove (6) is formed to have a width in the circumferential direction equal to or larger than a width of the contact portion in the circumferential direction.

3. The transmission according to claim 2,
wherein the contact potion is formed as projecting portions having the widths in the circumferential direction being uniform and arranged at even intervals in the circumferential directions, and
wherein the lubrication groove (6) is a recessed portion formed between the projecting portions.

4. The transmission according to claim 3, wherein the lubrication groove (6) is formed such that at least one of end surfaces of the recessed portion in the circumferential direction is positioned between teeth of the clutch gear (3).

5. The transmission according to any one of claims 1 to 4
wherein the stopper (7) is formed at an end surface of the speed change gear (2).

6. The transmission according to any one of claims 1 to 5
wherein the coupling sleeve (5) is formed such that an outer peripheral surface is declined toward the end surface that contacts the stopper (7), so as to guide the lubricating oil on the outer peripheral surface to the contact surface.

## Patentansprüche

1. Getriebe, umfassend:
ein Kupplungszahnrad (3), das auf einer Seitenfläche eines Schaltgetriebes (2) angeordnet ist und einstückig mit dem Schaltgetriebe (2) drehbar ist;
eine Mitnehmerhülse (5), die mit dem Kupplungszahnrad (3) durch Verschieben auf einer Außenumfangsfläche einer Führungsmuffe verbindbar ist;
einen Anschlag (7), der zwischen der Seitenfläche des Schaltgetriebes (2) und
einer Stirnseite in einer Verschieberichtung der Mitnehmerhülse (5) angeordnet ist, um das Verschieben der Mitnehmerhülse zum Schaltgetriebe (2) zu hemmen;
**dadurch gekennzeichnet, dass**
eine Schmierungsnut (6) als Schmieröldurchgang auf einer Kontaktfläche zwischen der Mitnehmerhülse (5) und dem Anschlag (7) ausgebildet ist, wobei die Schmierungsnut (6) dem Kupplungszahnrad (3) Schmieröl zuführen kann,
wenn die Mitnehmerhülse (5) den Anschlag berührt; und
eine innere Stirnfläche jedes Anschlags (7), die einem Außenumfang des Kupplungszahnrad (3) zugewandt ist, an einer Position etwas entfernt von der Außenumfangsfläche des Kupplungszahnrads (3) in radialer Richtung so angeordnet ist, dass diese einen Zwischenraum in Bezug auf die Außenumfangsfläche des Kupplungszahnrads (3) aufweist.

2. Getriebe nach Anspruch 1,
wobei der Anschlag (7) einen Kontaktbereich aufweist, der die Mitnehmerhülse (5) zumindest an zwei Positionen in Umfangsrichtung berührt,
und
wobei die Schmierungsnut (6) mit einer Breite in der Umfangsrichtung ausgebildet ist, die gleichgroß oder größer als eine Breite des Kontaktbereichs in Umfangsrichtung ist.

3. Getriebe nach Anspruch 2,
wobei der Kontaktbereich als vorstehende Bereiche mit den Breiten in der Umfangsrichtung ausgebildet ist, die einheitlich sind und in gleichmäßigen Abständen in den Umfangsrichtungen angeordnet sind, und
wobei die Schmierungsnut (6) ein vertiefter Bereich ist, der zwischen den vorstehenden Bereichen ausgebildet ist.

4. Getriebe nach Anspruch 3, wobei die Schmierungsnut (6) so ausgebildet ist, dass zumindest eine der Stirnflächen des vertieften Bereichs in der Umfangsrichtung zwischen Zähnen des Kupplungszahnrads (3) positioniert ist.

5. Getriebe nach einem der Ansprüche 1 bis 4,
wobei der Anschlag (7) an einer Stirnfläche des Schaltgetriebes (2) ausgebildet ist.

6. Getriebe nach einem der Ansprüche 1 bis 5,
wobei die Mitnehmerhülse (5) so ausgebildet ist, dass eine Außenumfangsfläche zur Stirnseite geneigt ist, die den Anschlag (7) berührt, um das Schmieröl auf der Außenumfangsfläche der Kontaktfläche zu führen.

## Revendications

1. Transmission comprenant :
un pignon d'embrayage (3) agencé au niveau d'une surface latérale d'un engrenage de changement de vitesse (2) et pouvant tourner d'un seul tenant avec l'engrenage de changement de vitesse (2) ;
un manchon d'accouplement (5) pouvant être relié au pignon d'embrayage (3) en coulissant sur une surface périphérique extérieure d'un moyeu de synchroniseur ;
un élément de butée (7) agencé entre la surface latérale de l'engrenage de changement de vitesse (2) et une surface d'extrémité dans une direction de coulissement du manchon d'accouplement (5), dans le but de restreindre le coulissement du manchon d'accouplement vers l'engrenage de changement de vitesse (2) ; **caractérisée en ce que**
une rainure de lubrification (6) sous forme d'un passage d'huile de lubrification est formée au niveau d'une surface de contact entre le manchon d'accouplement (5) et l'élément de butée (7), la rainure de lubrification (6) étant capable d'alimenter l'huile de lubrification au pignon d'embrayage (3) lorsque le manchon d'accouplement (5) entre en contact avec l'élément de butée ; et
une surface d'extrémité intérieure de chaque élément de butée (7) faisant face à une surface périphérique extérieure du pignon d'embrayage (3) est formée à une position légèrement éloignée de la surface périphérique extérieure du pignon d'embrayage (3) dans une direction radiale de manière à avoir un jeu par rapport à la surface périphérique extérieure du pignon d'embrayage (3).

2. Transmission selon la revendication 1,
dans laquelle l'élément de butée (7) a une partie de contact qui entre en contact avec le manchon d'accouplement (5) au moins au niveau de deux positions dans une direction circonférentielle, et
dans laquelle la rainure de lubrification (6) est formée de manière à avoir une largeur dans la direction circonférentielle supérieure ou égale à une largeur de la partie de contact dans la direction circonférentielle.

3. Transmission selon la revendication 2,
dans laquelle la partie de contact est formée en tant que parties en saillie ayant les largeurs dans la direction circonférentielle qui sont uniformes et agencées à des intervalles réguliers dans les directions circonférentielles, et
dans laquelle la rainure de lubrification (6) est une partie en creux formée entre les parties en saillie.

4. Transmission selon la revendication 3, dans laquelle la rainure de lubrification (6) est formée de sorte qu'au moins une surface d'extrémité parmi les surfaces d'extrémité de la partie en creux dans la direction circonférentielle soit positionnée entre les dents du pignon d'embrayage (3).

5. Transmission selon l'une quelconque des revendications 1 à 4 dans laquelle l'élément de butée (7) est formé au niveau d'une surface d'extrémité de l'engrenage de changement de vitesse (2).

6. Transmission selon l'une quelconque des revendications 1 à 5 dans laquelle le manchon d'accouplement (5) est formé de sorte qu'une surface périphérique extérieure soit inclinée vers la surface d'extrémité qui entre en contact avec l'élément de butée (7), de manière à guider l'huile de lubrification sur la surface périphérique extérieure vers la surface de contact.
